# EUROPEAN PATENT APPLICATION

(11) **EP 2 650 554 A1**
(43) Date of publication of application: **16.10.2013**
(21) Application number: 13163535.1
(22) Date of filing: 12.04.2013
(51) Int. Cl.: F16D 51/22, F16D 65/28, F16D 65/50, F16D 66/02, F16D 125/30

(54) **Vehicle brake monitoring apparatus and method**

(30) Priority: 13.04.2012 US 201213446434
(71) Applicant: Todd, Jamie Bishop, Guelph, ON N1H 3P9 (CA); Todd, Sam Jamison, Guelph, ON N1K 1V2 (CA)
(72) Inventor: Todd, Jamie Bishop, Guelph, ON N1H 3P9 (CA); Todd, Sam Jamison, Guelph, ON N1K 1V2 (CA)
(74) Representative: Jones, Nicolas Guy

(57) **Abstract**

A vehicle brake monitoring apparatus comprises a sensor configured to be mounted on a brake slack adjustor and to cooperate with a magnet associated with a brake clevis for detecting the position of the brake clevisrelative to the brake slack adjustor during vehicle braking. The sensor is unconnected to the clevis for remotely detecting the position.

## Description

### Field of the Invention

The present invention relates to a vehicle brake monitoring apparatus and method for highway transport vehicles.

### Background of the Invention

Brake-related problems account for over half of all violations that can bring ahighway transport vehicle into an out-of-service state during roadside inspections. Brake problems are also a common cause of transport vehicle accidents, and have been cited as a factor in nearly 30% of all truckrelated accidents by the Commercial Vehicle Safety Association. For vehicle owners or operators of these vehicles, brake problems can therefore lead to costly downtime and, in the event of an accident, possible liability and insurance expenses.

In many cases, the status of brake assembliesis assessed during roadside service inspections. These brake assembly inspections typically involve the measurement of the travel distance of the brake push rodto an accuracy level on the order of a fraction of an inch. However, it is estimated that 9% of vehicles that pass this teststill have other brake issues that are difficult or impossible to detect without otherwise removing the wheel and/or dismantling the brake assembly and that warrant an out-of-service violation.

In-cab vehicle monitoring systems for highway transport vehicles are known. For example, U.S. Patent No. 5,959,365 to Mantini et al. discloses an early warning device for tire rims and hub assemblies, comprising one or more individual axle spindle sensors, a programmable microprocessorfor receiving and processing the sensor signals to detect an alarm condition, and alarm means to alert the driver of a problem with one or more of the wheels. The sensors are positioned in proximity to the axles and are capable of measuring heat, noise, vibration and/or knocking, which can be indicators of imminent detachment of the tire rim or the wheel hub assembly from the vehicle.

U.S. Patent Application Publication No. 2002/0019688 to Mantini discloses a brake monitoring system for trucks, tractors, trailers or buses using air brakes. Anapparatus to monitor the braking system and the brake S-cam positioning comprises a positioning transducer which can convert the rotational movement of the brake S-camcamshaft to an electrical signal. This signal is used as the input to a microprocessor system for further analysis and comparison in determining the condition of the S-cam operations. The transducer signal not only provides the S-cam position, but the speed of rotation both in braking and release of the brakes. After analyzing the signal from the transducer with the microprocessor system some of the failure of the braking system can be detected. By comparing the signal frog different wheels, the system can detect delays of applying brakes or delays of releasing brakes which also could be a failure condition of the air brake system.

U.S. Patent No. 5,689,231 to Olson discloses a brake monitor for monitoring air brake adjustment as measured by push rod travel distance that comprises a bracket straddling a push rod clevis of a brake system. A clevis pin connecting the push rod clevis to a slack adjustor, and secured to the slack adjustor by a socket set screw, extends beyond the boundary of the push rod clevis and is received within a transducer attached to the bracket. Clevis pin rotation causes transducer output, corresponding to specific angular rotation of the clevis pin, which output is received by a display device and communicated to the user. The system can be equipped with a black box-type memory for use by accident investigative authorities.

International PCT Application Publication No. WO 2002/029274 to Goncalves et al. discloses an air brake monitoring apparatus for use in indicating a wear condition of brakes on an air braking system in a vehicle having a plurality of brakes. The air brake monitoring apparatus comprises an equal plurality of magnets, and a mount for respectively operatively mounting each magnet on a selected one of brake clevis rods and an air cylinder housing in fixed relation thereto. The air brake monitoring apparatus also comprises an equal plurality of sensor units and a mount for respectively operatively mounting each sensor unit on the other one of the brake clevis rods and the air cylinder housing in fixed relation thereto. Each sensor unit has a second plurality of magnetically responsive sensor elements mounted therein for sensing the relative longitudinal position of the magnet relative to a respective sensor unit, when the magnets and the sensor units are mounted in place, such that each of the magnetically responsive sensor element produces an electrical signal in response to the relative longitudinal position of the respective magnet. An indicator is mounted on the truck and is operatively connected to the sensor units for receiving the electrical signals therefrom and providing an operator perceptible indication corresponding to the received signals, and indicative of the wear condition of the brakes.

While vehicle brake monitoring apparatuses and methods are known, it is an object of the present invention to provide anovel vehicle brake monitoring apparatus and method that overcomes deficiencies in such known systems and methods.

### Summary of the Invention

Accordingly, in one aspectthere is provided a vehicle brake monitoring apparatus comprising: a sensor configured to be mounted on a brake slack adjustor and to cooperate with a magnet associated with a brake clevis for detecting the position of the brake clevis relative to the brake slack adjustor during vehicle braking, the sensor being unconnected to the clevis for remotely detecting the position.

In one embodiment, the apparatus further comprises a bracket configured to be mounted on the clevis and to support the magnet.In another embodiment, the bracket is configured to align with a clevis pin of the brake clevis.

In another aspect, there is provided a slack adjustor for a vehicle brake, the slack adjustor having a sensor mounted thereon, the sensor being configured to cooperate with a magnet associated with a brake clevis for remotely detecting the relative position of the brake clevis during vehicle braking.

In one embodiment, the sensor is a magnetic sensor.In another embodiment, the sensor is a proximity sensor.

In another aspect, there is provided a vehicle brake monitoring apparatus comprising: a sensor configured to be mounted on one of a brake slack adjustor and a brake clevis, the sensor being configured to remotely measure the relative angular position between the brake clevis and the brake slack adjustor during vehicle braking.

In one embodiment, the sensor is a magnetic sensor. In a further embodiment, the sensor is mounted on the brake slack adjustor, the sensor being capable of cooperating with a magnet associated with the brake clevis for remotely measuring the angular position. In a further embodiment, the magnet is mounted on a bracket configured to be mounted on the brake clevis. In another embodiment, the sensor is mounted on the brake clevis, the sensor being capable of cooperating with a magnet configured to be mounted on the brake slack adjustor for remotely measuring the angular position.

In another embodiment, the sensor is a proximity sensor. In a further embodiment, the sensor is mounted on the brake slack adjustor, the sensor being capable of sensing a ferrous portion of the brake clevis for remotely measuring the angular position. In a further embodiment, the ferrous portion of the brake clevis comprises a bracket mounted on the clevis. In another embodiment, the sensor is mounted on the brake clevis, the sensor being capable of sensing a ferrous portion of the brake slack adjustor for remotely measuring the angular position.

In another aspect, there is provided a vehicle brake monitoring system comprising: a sensor configured to be mounted on a brake slack adjustor and to cooperate with a magnet associated with a brake clevis for detecting the position of the brake clevis relative to the brake slack adjustor during vehicle braking, the sensor being unconnected to the clevis for remotely detecting the position; and processing structure communicating with the sensor, the processing structure processing output of the sensor to determine brake status.

In one embodiment, the system further comprises a bracket mounted on the clevis and supporting the magnet. In another embodiment, the bracket is aligned with a clevis pin of the brake clevis.In another embodiment, the system further comprises a display screen in communication with the processing structure, the display screen displaying the brake status.In another embodiment, the brake status comprises brake stroke length.

In another aspect, there is provided a method of monitoring a vehicle brake, the method comprising: remotely sensing at least one relative position of a magnet associated with a brake clevis by a sensor mounted on a brake slack adjustor; communicating the at least one relative position to processing structure; and comparing the at least one relative position to previous relative position data to determine brake status.

In one embodiment, the at least one relative position comprises relative angular position between the brake clevis and the brake slack adjustor.In another embodiment, the method further comprises: displaying the brake status.In another embodiment, the brake status comprises brake stroke length.

In another aspect, there is provided a vehicle brake assembly comprising the above-described vehicle brake monitoring apparatus fitted thereto.

### Brief Description of the Drawings

Embodiments will now be described more fully with reference to the accompanying drawings in which:

Figure 1 is a perspective view of a prior art brake assembly;

Figure 2 is a perspective view of a brake monitoringapparatusfitted to the brake assembly of Figure 1;

Figures3a and 3b are side elevational views of the brake monitoring apparatus of Figure 2, showing a brake pushrod in retracted and extended states, respectively;

Figures 4a and 4b are side elevational and perspective views, respectively, of a sensor magnet assembly forming part of the brake monitoring apparatus of Figure2;

Figures5a and 5b are side elevational and perspective views, respectively, of a sensor magnet forming part of the brake monitoring apparatus of Figure2; and

Figure 6 is a perspective view of a sensor forming part of the brake monitoring apparatus of Figure2.

### Detailed Description of the Embodiments

Highway transport vehicles, such as for example tractor-trailer trucks, comprise a tractor carrying a cab and one or more trailers connected to the tractor. For example, aconvention tractor-trailer truck may often comprise a tractor having three axles and a trailer having two axles. Each axle supports a plurality of wheels. Brake assemblies are provided on the axles adjacent the wheels to provide braking force to the wheels.

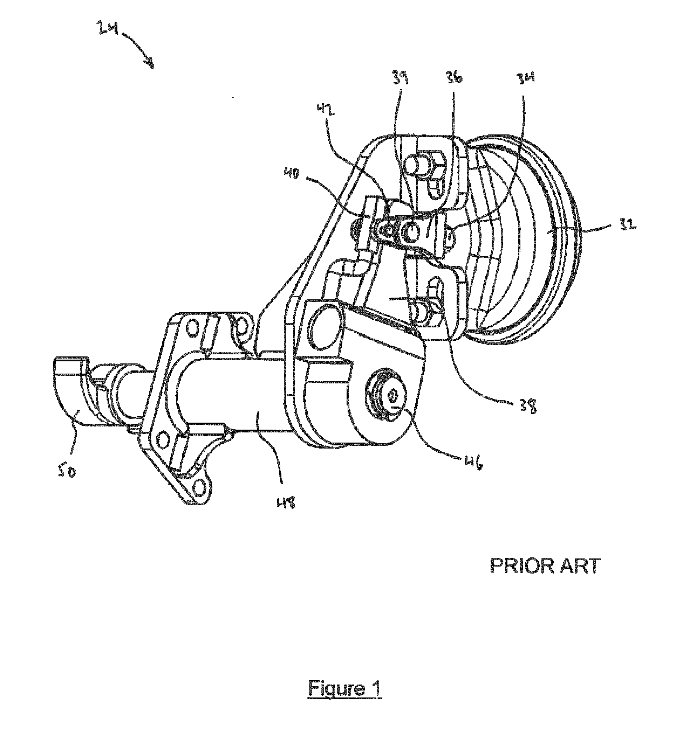

Figure 1 shows a conventional brake assembly that may be used to provide a braking force to tractor-trailer truck wheels, and which is generally referred to using reference numeral 24. As can be seen, brake assembly 24 is in the form of an air-powered drum brake. The interrelation of the constituent parts of brake assembly 24, as is known in the art, is clearly illustrated. Brake assembly 24 comprises an activator 32 containing a volume of pressurized air which, upon application of the brake pedal (not shown), applies pressure against a movable diaphragm (not shown) connected to a push rod 34. Push rod 34 is connected to a clevis 36, which is rotatably coupled to a slack adjustor 38 by a clevis pin 39. In this embodiment, the slack adjustor 38 comprises a ratchetin linkage 40that is rotatably coupled to the clevis 36 by a linkage pin 42.As will be understood, the slack adjustor 38serves as a lever to convert the linear motion of push rod 34 to rotational motion of a brake camshaft 46 about the pivot axis of slack adjustor 38. Camshaft 46 is supported by one or more bushings incamshaft housing 48, which serve to stabilize camshaft 46 during operation. An S-cam 50 is affixed tothe end of camshaft 46that is distal to the push rod 34. S-cam 50 is in turn in contact with two S-camrollers (not shown), each of which is positioned to roll along a convex surface of S-cam 50 when camshaft 46 is rotated. Each S-camroller is rotatablyseated within a receiving notch in brake shoes (not shown).

During operation of brake assembly 24, upon application of vehicle brakes by the driver, push rod 34 and clevis 36 extend in unison from activator 32, which causes slack adjustor 38 to rotate. The rotation of slack adjustor 38 in turn causes the rotation of camshaft 46 and S-cam 50. As S-cam 50 rotates, each S-camroller rolls along the convex surface of the S-cam towards respective outer tips of S-cam 50. As each S-camroller rolls outward, the brake shoes are pushed outwards from the camshaft 46 and from their respective resting positions toward an inner surface of a brake drum (not shown) to make frictional contact therewith and thereby generate a braking force. Opposing this motion is a brake shoe return spring (not shown), which connects the brake shoes together. The brake shoe return spring provides a tensile force that biases brake shoes to their original resting positions (i.e. the "seated" positions), upon cessation of pressure from activator 32. As brake shoes return to the seated positions, camshaft 46is also forced to rotate back to its initial position. Accordingly, rotation of camshaft 46 back to its initial position causes push rod 34 to apply pressure to the movable diaphragm so as to return the moveable diaphragm to its initial position.

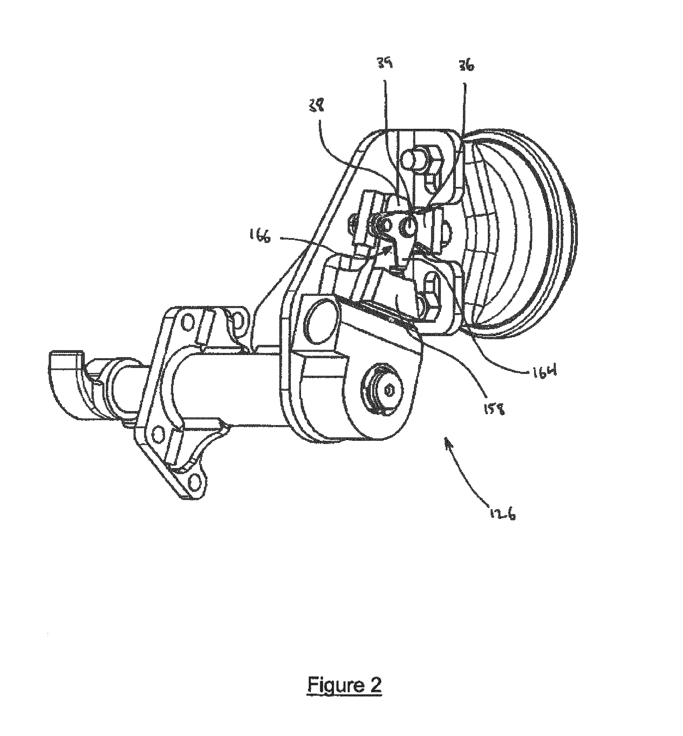

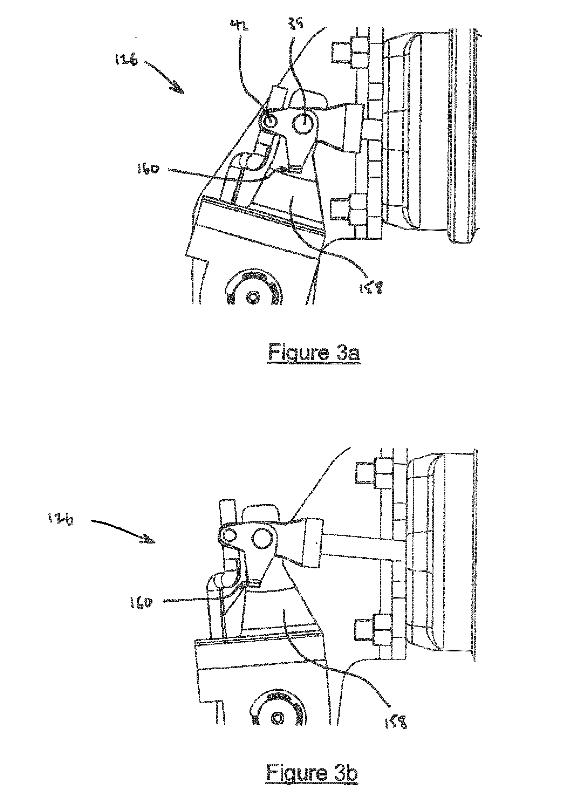

Figures2, 3a and 3b show a brake monitoring apparatus 126, and its relationship to brake assembly 24 onto which it is fitted. Brake monitoring apparatus 126 comprises a magnetic sensor 158that is mounted onthe slack adjustor 38, and which is configured to monitor the relative position of a sensor magnet 160 that is affixed to a sensor magnet bracket 164 that is mounted on the clevis 36. The sensor magnet 160 and the sensor magnet bracket 164together form a sensor magnet assembly 166.

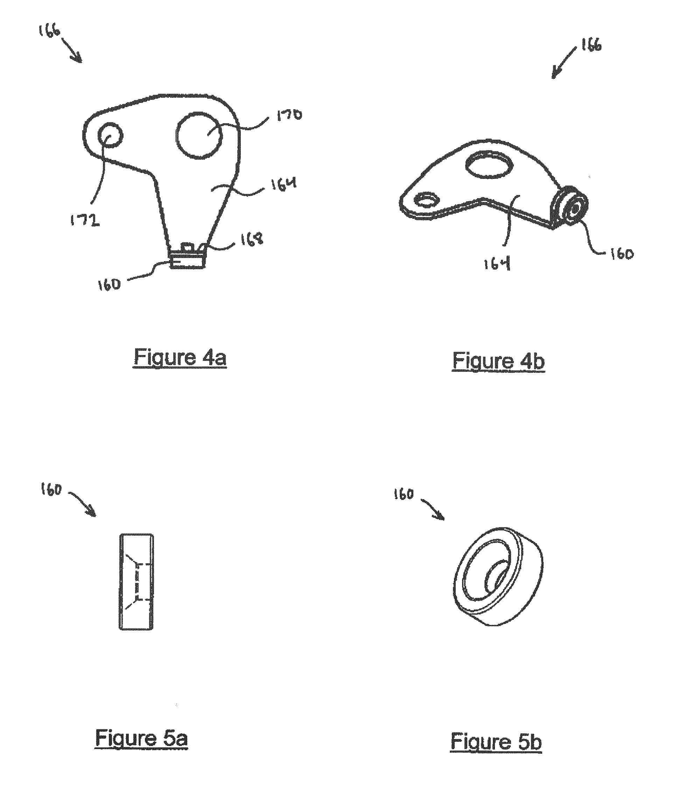

Figures 4a and 4b better illustrate the sensor magnet assembly 166. The sensor magnet bracket 164comprises a plate 167 having a flange 168extending from one end thereof and supporting the sensor magnet 160. Plate 167 comprises a first aperture 170 that is sized and positioned to accommodate a portion of the clevis pin 39 that protrudes from the surface of the clevis 36. In this embodiment, plate 167 also comprises a second aperture 172 that is sized and positioned to accommodate a portion of the linkage pin 42 that protrudes from the surface of the ratcheting linkage 40. As will be appreciated, the first aperture 170, and additionally in this embodiment the second aperture 172, ensures that the bracket 164, and therefore that the sensor magnet 160, is correctly positioned when mounted onthe clevis 36.

Figures 5a and 5b better illustrate the sensor magnet 160. Sensor magnet 160 is an axially magnetized disc magnet having a through-bore and a counter sink for receiving a fastener that fastens the magnet 160 to the flange 168 of the bracket 164.

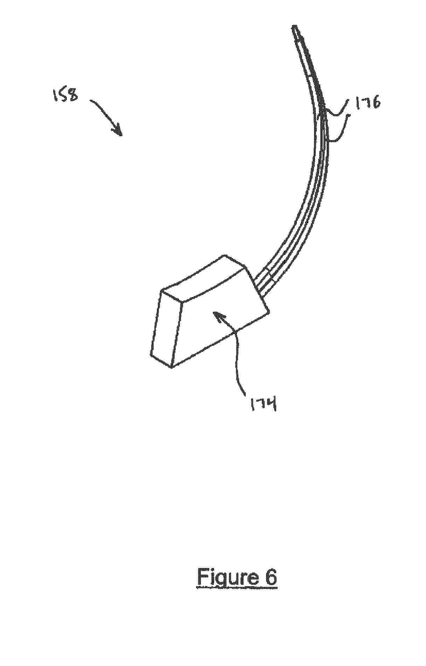

Figure 6better illustrates the sensor 158. Sensor 158 is a non-contact magnetic sensor that is capable of remotely sensing the position of sensor magnet 160, as it moves relative to the sensor 158 during braking action.In this manner, the sensor 158 is configured to remotely measure the position of the clevis 36relative to the slack adjustor 38 during braking. As will be understood, as the slack adjuster 38 is rotatably coupled to the clevis 36, the position of the clevis 36 relative to the slack adjustor may be regarded as a relative angular position. In this embodiment, the sensor 158is aMelexis MLX90316 sensor, manufactured byMelexisN.V. of Ieper, Belgium, however it will be understood that in other embodiments, other sensors may alternatively be used. The sensor 158 has a surface 174 that abuts against a surface of the slack adjustor 38, when the sensor 158 is mounted on the slack adjustor 38. The sensor 158 also comprises a pair of electrical connectors 176 for providing an electrical connection to a suitable processing structure (not shown).

In operation, upon application of vehicle brakes by the driver, push rod 34 and clevis 36 extend in unison from activator 32, which causes slack adjustor 38 to rotate. As slack adjustor 38 rotates, sensor 158 mounted on slack adjustor 38 moves relative to sensor magnet 160 affixed to the sensor magnet bracket 164 mounted on the clevis 36. This relative movement is detected by the sensor 158, which is continuously measuringthe position of the sensor magnet 160 and generating relative position data. As slack adjustor 38 continues to rotate, it causes the unified rotation of slack adjustor 38, camshaft 46, and S-cam 50. The rotation of camshaft 46 in turn results in the pressing of the brake shoe 42 against the brake drum 44, and is therefore intimately linked to the braking action. The relative position data generated by the sensor 158 is communicated by way of electrical connectors 176 to the processing structure.

The processing structure processes the relative position data to assess the stroke of brake assembly 24. The stroke length may be calculated from the end points of the range of movement of the sensor magnet 160relative to the sensor 158 during braking, and as measured by the sensor magnet 148. These end points generally correspond to the retracted and extended positions of the push rod 34, shown in Figures 3a and 3b, respectively. The value of the measured stroke may be compared to a reference value of stroke stored in memory (not shown) of the processing structure to determine if the stroke exceeds a threshold limit. The value of the measured stroke, and any comparison of the measured stroke to the reference value, may be displayed on a display screen for viewing by the driver of the vehicle, and/or may be saved in the memory of the processing structure. Brake monitoring systems that include processing structure for processing and displaying sensor data acquired from brake monitoring apparatuses are known, and have for example been described in U.S. Patent Application Publication No. 2011/0241866 to Todd et al., entitled "VEHICLE BRAKE MONITORING SYSTEM AND METHOD", and in U.S. Patent Application Publication No. 2011/0254679 to Todd et al., entitled "VEHICLE BRAKE MONITORING SYSTEM AND METHOD", the contents of which are incorporated by reference herein in their entirety.

As will be appreciated, the brake monitoring apparatus 126 may advantageously be fitted to an existing brake assembly 24 without requiring replacement or modification of any original part of the brake assembly 24. Forexample, the brake monitoring apparatus 126 may advantageously be fitted to an existing brake assembly 24 without requiring replacement or modification of the originalclevis pin 39.As will be understood, this allows a vehicle having the brake monitoring apparatus 126 fitted thereto to comply with any insurance requirements relating to use of original equipment manufacturer (OEM) parts, for example.

Additionally, and as will be appreciated, the brake monitoring apparatus 126 may advantageously be fitted to an existing brake assembly 24 in a quick and facile manner, and without requiring disassembly of the brake assembly 24.

Additionally, and as will be appreciated, mounting the sensor 158 directly on the slack adjustor 38, and not for example on a bracket distal from the slack adjustor 38 or from the clevis 36, advantageously allows the brake monitoring apparatus 126 to have a generally low-profile configuration which, for example, is robust to contact with debris that could otherwise damage or misalign the sensor 158.

Additionally, and as will be appreciated, the sensor 158 operates in a "non-contact" manner remote from the clevis 36 and the clevis pin 39, which advantageously eliminates any friction that would otherwise occur between the sensor 158 and either of these parts, and thereby extends the service life of the sensor 158.

In one embodiment, the sensor 158may be mounted on the slack adjustor during the manufacture of the slack adjustor, and such that the mounted sensor is "built-in", or otherwise intcgralwith, the slack adjustor prior to shipping. As will be understood, manufacturers could sell or distribute slack adjustors having either an integrated sensor mounted thereon, or no integrated sensor mounted thereon.

Although in embodiments described above, the brake monitoring apparatus comprises a magnetic sensor mounted on the slack adjustor that is capable of remotely sensing the position of the sensor magnet, in other embodiments, the brake monitoring apparatus may alternatively comprise another form of sensor. For example, in one embodiment, the brake monitoring apparatus may alternatively comprise a proximity sensor mounted on the slack adjustorthat is capable of remotely sensing a ferrous portion of the clevis, a ferrous portion of the sensor magnet assembly if such a sensor magnet assembly is mounted on the clevis, or a ferrous portion of any other item mounted on the clevis.In this embodiment, the proximity sensor is a Honeywell 1 GP7001 sensor, manufactured by Honeywell International Inc. of Morristown, NJ, U.S.A., however it will be understood that in other embodiments, other proximity sensors may alternatively be used. In this manner, the proximity sensor is configured to remotely measure the relative angular position of the clevis and the slack adjustor during braking.

In still other embodiments, the brake monitoring apparatus may alternatively comprisca Hall effectsensor that is capable of remotely sensing the position of the sensor magnet. For example, in one embodiment, the Hall effect sensor may be a Honeywell 1GP4001 single hall sensor, manufactured by Honeywell International Inc.

Although in embodiments described above, the brake monitoring apparatus comprises a sensor mounted on the slack adjustor and a sensor magnet mounted on sensor magnet bracket mounted on the clevis, in other embodiments, the brake monitoring apparatus may alternatively comprise a sensor mounted on the clevis, or mounted on a bracket mounted on the clevis, and a sensor magnet mounted on the slack adjustor. In this manner, the sensor is configured to remotely measure the relative angular position of the clevis and the slack adjustor during braking. In a related embodiment, the brake monitoring apparatus may alternatively comprise a proximity sensor mounted on the clevis, or mounted on a bracket mounted on the clevis, that is capable of remotely sensing a ferrous portion of the slack adjustor, a ferrous portion of any other item mounted on the slack adjustor, or a sensor magnet if any such sensor magnet is mounted on the slack adjustor. In this manner, the proximity sensor is configured to remotely measure the relative angular position of the clevis and the slack adjustor during braking.

Although in embodiments described above, the slack adjustor comprises a ratcheting linkage, in other embodiments, the slack adjustor may alternatively not comprise a ratcheting linkage.

Although in embodiments described above, the sensor magnet bracket comprises a second aperture that is sized and positioned to accommodate a portion of the linkage pin, in other embodiments, such as for example in embodiments in which the slack adjustor does not comprise any ratcheting linkage, the sensor magnet bracket may alternatively not comprise any second aperture.

Although embodiments have been described above with reference to the accompanying drawings, those of skill in the art will appreciate that variations and modifications may be made without departing from the scope thereof as defined by the appended claims.

The present application discloses vehicle brake monitoring apparatus, a slack adjustor, a vehicle brake monitoring system, a method and a vehicle brake assembly according to the followin sequence of numbered clauses:
1. A vehicle brake monitoring apparatus comprising:
   a sensor configured to be mounted on a brake slack adjustor and to cooperate with a magnet associated with a brake clevis for detecting the position of the brake clevisrelative to the brake slack adjustor during vehicle braking, the sensor being unconnected to the clevis for remotely detecting said position.
2. The apparatus of clause 1, further comprising a bracket configured to be mounted on the clevis and to support the magnet.
3. The apparatus of clause 1, wherein the bracket is configured to align with a clevis pin of the brake clevis.
4. A slack adjustor for a vehicle brake, the slack adjustor having a sensor mounted thereon, the sensor being configured to cooperate with a magnet associated with a brake clevis for remotely detecting the relative position of the brake clevis, during vehicle braking.
5. The slack adjustor of clause 4, wherein the sensor is a magnetic sensor.
6. The slack adjustor of clause 4, wherein the sensor is a proximity sensor.
7. A vehicle brake monitoring apparatus comprising:
   a sensor configured to be mounted on one of a brake slack adjustor and a brake clevis, the sensor being configured to remotely measurethe relative angular position between the brake clevis and the brake slack adjustor during vehicle braking.
8. The apparatus of clause 7, wherein the sensor is a magnetic sensor.
9. The apparatus of clause 8, wherein the sensor is mounted on the brake slack adjustor, the sensor being capable of cooperating with a magnet associated with the brake clevis for remotely measuring said angular position.
10. The apparatus of clause 9, wherein the magnet is mounted on a bracket configured to be mounted on the brake clevis.
11. The apparatus of clause 8, wherein the sensor is mounted on the brake clevis, the sensor being capable of cooperating with a magnet configured to be mounted on the brake slack adjustor for remotely measuring said angular position.
12. The apparatus of clause 7, wherein the sensor is a proximity sensor.
13. The apparatus of clause 12, wherein the sensor is mounted on the brake slack adjustor, the sensor being capable of sensing a ferrous portion of the brake clevis for remotely measuring said angular position.
14. The apparatus of clause 13, wherein the ferrous portion of the brake clevis comprises a bracket mounted on the clevis.
15. The apparatus of clause 12, wherein the sensor is mounted on the brake clevis, the sensor being capable of sensing a ferrous portion of the brake slack adjustorfor remotely measuring said angular position.
16. A vehicle brake monitoring system comprising:
   a sensor configured to be mounted on a brake slack adjustor and to cooperate with a magnet associated with a brake clevis for detecting the position of the brake clevisrelative to the brake slack adjustor during vehicle braking, the sensor being unconnected to the clevis for remotely detecting said position; and
   processing structure communicating with the sensor, the processing structure processing output of the sensor to determine brake status.
17. The system of clause 16, further comprising a bracket mounted on the clevis and supporting the magnet.
18. The system of clause 17, wherein the bracket is aligned with a clevis pin of the brake clevis.
19. The system of clause16, further comprising a display screen in communication with the processing structure, the display screen displaying the brake status.
20. The system of clause16, wherein the brake status comprises brake stroke length.
21. A method of monitoring a vehicle brake, the method comprising the steps of:
   remotelysensing at least one relative position of a magnet associated with a brake clevis by a sensor mounted on a brake slack adjustor;
   communicatingtheat least one relative position to processing structure; and
   comparingtheat least one relative position to previous relative position data to determine brake status.
22. The method of clause 21, wherein the at least one relative position comprises relative angular position between the brake clevisand the brake slack adjustor.
23. The method of clause21,further comprising the step of:
   displayingthe brake status.
24. The methodof clause21, wherein the brake status comprises brake stroke length.
25. A vehicle brake assembly comprising the vehicle brake monitoring apparatus of clause 1 fitted thereto.

## Claims

1. A vehicle brake monitoring apparatus comprising:
a sensor configured to be mounted on one of a brake slack adjustor and a brake clevis, the sensor being configured to remotely measure the relative angular position betweeen the brake clevis and the brake slack adjustor during vehicle braking.

2. The apparatus of claim 1, wherein the sensor is a magnetic sensor.

3. The apparatus of claim 2, wherein the sensor is mounted on the brake slack adjustor, the sensor being capable of cooperating with a magnet associated with the brake clevis for remotely measuring said angular position.

4. The apparatus of claim 3, wherein the magnet is mounted on a bracket configured to be mounted on the brake clevis.

5. The apparatus of claim 2, wherein the sensor is mounted on the brake clevis, the sensor being capable of cooperating with a magnet configured to be mounted on the brake slack adjustor for remotely measuring said angular position.

6. The apparatus of claim 1, wherein the sensor is a proximity sensor.

7. The apparatus of claim 6, wherein the sensor is mounted on the brake slack adjustor, the sensor being capable of sensing a ferrous portion of the brake clevis for remotely measuring said angular position.

8. The apparatus of claim 6, wherein the sensor is mounted on the brake clevis, the sensor being capable of sensing a ferrous portion of the brake slack adjustor for remotely measuring said angular position.

9. A vehicle brake monitoring apparatus comprising:
a sensor configured to be mounted on a brake slack adjustor and to cooperate with a magnet associated with a brake clevis for detecting the position of the brake clevis relative to the brake slack adjustor during vehicle braking, the sensor being unconnected to the clevis for remotely detecting said position.

10. The apparatus of claim 9, further comprising a bracket configured to be mounted on the clevis and to support the magnet.

11. A slack adjustor for a vehicle brake, the slack adjustor having a sensor mounted thereon, the sensor being configured to cooperate with a magnet associated with a brake clevis for remotely detecting the relative position of the brake clevis during vehicle braking.

12. The slack adjustor of claim 11, wherein the sensor is a magnetic sensor or a proximity sensor.

13. A vehicle brake monitoring system comprising:
the vehicle brake monitoring apparatus of any one of claims 1 to 10; and
processing structure communicating with the sensor, the processing structure processing output of the sensor to determine brake status.

14. The system of claim 13, further comprising a display screen in communication with the processing structure, the display screen displaying the brake status.

15. A vehicle brake assembly comprising the vehicle brake monitoring apparatus of any one of claims 1 to 10 fitted thereto.
